# EUROPEAN PATENT APPLICATION

(11) **EP 1 837 168 A1**
(43) Date of publication of application: **26.09.2007**
(21) Application number: 07405093.1
(22) Date of filing: 20.03.2007
(51) Int. Cl.: B29D 11/00

(54) **Molding of an array of optical elements and method of singulation**

(30) Priority: 20.03.2006 US 384558
(71) Applicant: Heptagon Oy, 02150 Espoo (FI)
(72) Inventor: Rudmann, Hartmut, 8919 Unterlunkhofen (CH); Rossi, Markus, 8645 Jona (CH)
(74) Representative: Frei Patent Attorneys

(57) **Abstract**

The method of manufacturing a plurality of optical elements includes the steps of
• providing a substrate,
• providing a replication material in a liquid or viscous or plastically deformable state,
• placing a replication tool, which comprises a plurality of replication sections each having negative structural features defining the shape of one of the optical elements, adjacent a face of the substrate, wherein the replication material is located between the tool and the substrate,
• consolidating the replication material,
• removing the replication tool from the substrate,
• performing, by a first separating tool, a first separating step between by which at least the replication material is cut trough along a separating line, which separating line separates at least two of the optical element structures from each other,
• performing, by a second separating tool different from the first separating tool, a second separating step along the separating line, whereby the substrate is cut through.

## Description

### FIELD OF THE INVENTION

The invention is in the field of manufacturing, by replication, optical elements, in particular refractive optical elements or diffractive micro-optical elements. More concretely, it deals with a method of replicating an element and a replication tool as described in the preamble of the corresponding independent claims.

### BACKGROUND OF THE INVENTION

It has been known to fabricate optical elements by replication techniques, such as embossing or molding. Of special interest are the wafer-scale fabrication processes, where an array of optical elements is fabricated on a disk-like ("wafer-") structure, which subsequently to replication is separated ("diced") into the individual elements.

Often, the optical elements after fabrication are subject to harsh environmental conditions. Firstly, during the manufacturing process of a device comprising the optical element, it is often desirable to carry out manufacturing steps (such as soldering etc.) at a stage where the optical element is already in its position. Such manufacturing steps (for example IR reflow soldering) may cause the optical element to be temporarily under special conditions (for example at a high temperature). Secondly, during the lifecycle of a product, parameters such as temperature, humidity, atmosphere composition etc. may vary strongly. Miniaturization of modem devices causes electrical, power-consuming elements and the optical elements to be closer together and interferes with an efficient shielding of the optical element from environmental influences. Therefore, miniaturization increases the demand for an environmentally robust optical element.

With wafer-scale replicated and subsequently diced elements it has been found, that often the lines of separation - often called dicing lines or dicing streets - are places of decreased robustness. For example, it has been observed that disintegration of optical elements starts at the end faces along the lines of separation.

### SUMMARY OF THE INVENTION

It is therefore an object of the invention to provide a manufacturing method which includes the simultaneous replication and subsequent separation of a plurality of optical or mechanical elements, and which provides environmentally robust elements.

According to the invention, a method of manufacturing a plurality of optical elements is provided, the method comprising the steps of
- providing a substrate,
- providing a replication material in a liquid or viscous or plastically deformable state,
- placing a replication tool, which comprises a plurality of replication sections each having negative structural features defining the shape of one of the optical elements, adjacent to a face of the substrate, wherein the replication material is located between the tool and the substrate,
- consolidating the replication material,
- removing the replication tool from the substrate,
- performing, by a first separating tool, a first separating step by which at least the replication material is cut through along a separating line, which separating line separates at least two of the optical element structures from each other,
- performing, by a second separating tool different from the first separating tool, a second separating step along the separating line, whereby the substrate is cut through.

The invention especially concerns the separating of the preliminary product that results after replication and consolidation of the replicated material on a multi-element-substrate. It is based on the insight, that the interface between a substrate and consolidated replication material is less affected by a separating process (for example a so-called "dicing") process if the separating process is carried out in two steps, where in a first separating step a cut is made in the preliminary product from the replication material side, whereby the replication material is cut through, and where in a second step the substrate is cut through with a different tool.

The separating tool used for the first separating step is preferably broader or wider than the separating tool used for the second separating step. In the first separating step, the substrate may be carved from the replication material side, but it is not cut through.

The method according to the invention features the advantage that the interface between the substrate and the replication material is less affected by the separating process, which fact directly has a positive influence on the robustness towards harsh environmental conditions and on the durability of the element. A further unexpected advantage is, that the separation process ("dicing") may be carried out quicker than according to the state of the art, even though it comprises two separation steps. The reason is that the second separation step may be carried out very quickly because it does not affect the interface between the substrate and the replication material.

Yet another advantage arises because the first separation tool causes a broader cut than the second separation tool. Due to this, the interface between the substrate and the replication material does not reach the line of separation end face. For this reason, handling of the optical element is easier: a tool (or a hand) holding the element may touch the end facet without there being a danger that the interface will be affected.

According to a first embodiment, the step of consolidating the replication material while the replication tool is in place produces a hardened product which is, after separation, ready-to-use.

According to a special embodiment, however, the solidification (curing, hardening, consolidating) of the replication material is done in two steps. A first solidification step, of course, is done prior to removing the replication tool so that the shape of the replication material is defined and fixed. A second (hardening) step, according to this special embodiment, is done after the first separating step. The second (hardening) step may be carried out by baking the preliminary product at some stage after the first separating step, by illumination with appropriate radiation, or, depending on the replication material, by cooling (in the case of thermoplastic replication material) or by simply waiting.

The special embodiment is based on the newly gained insight that the interface between a consolidated, but not fully hardened (not fully consolidated, i.e., not completely cross-linked for thermosetting, curable replication material or not completely cooled for thermoplastic replication material) replication material and the substrate may at least partially be cured when a further hardening step is carried out. This especially affects micro-cracks close to the end face.

The second solidification step may be carried out prior to the second separating step, or thereafter.

According to another aspect, a method of manufacturing a plurality of optical elements is provided, the method comprising the steps of
- providing a substrate,
- providing a thermosetting replication material in a liquid or viscous or plastically deformable state,
- placing a replication tool, which comprises a plurality of replication sections each having negative structural features defining the shape of one of the optical elements, adjacent to a face of the substrate, wherein the replication material is located between the tool and the substrate,
- curing the replication material,
- removing the replication tool from the substrate,
- performing, by a first separating tool, a first separating step by a first cut is made, by which at least the replication material is cut through along a separating line, which separating line separates at least two of the optical element structures from each other,
- performing, by a second separating tool different from the first separating tool, a second separating step along the separating line, whereby the substrate is cut through by a second cut,
- wherein the first cut is broader than the second cut.

For the sake of convenience, the dimension perpendicular to the surface of the substrate, which comprises an essentially flat surface - is denoted as "height". In actual practice, the entire arrangement may also be used in an upside down configuration or also in a configuration where the substrate surface is vertical or at an angle to the horizontal. The according direction perpendicular to the surface is denoted z-direction. The terms "periphery", "lateral" and "sides" relate to a direction perpendicular to the z-direction.

### BRIEF DESCRIPTION OF THE DRAWINGS

In the following, embodiments of the invention are described with reference to drawings. The drawings are all schematic and show:
- Fig. 1 a cross section of a section of a prior art element where delamination has started from the line of separation end face,
- Fig. 2 a flowchart of an embodiment of the method according to the invention,
- Fig. 3 a cross section of a replication tool,
- Fig. 4 a view of a preliminary product after replication but prior to separation,
- Fig. 5 a cross section of an alternative replication tool,
- Fig. 6a-6c illustrate separating steps of the method according to the invention.

### DESCRIPTION OF THE PREFERRED EMBODIMENTS

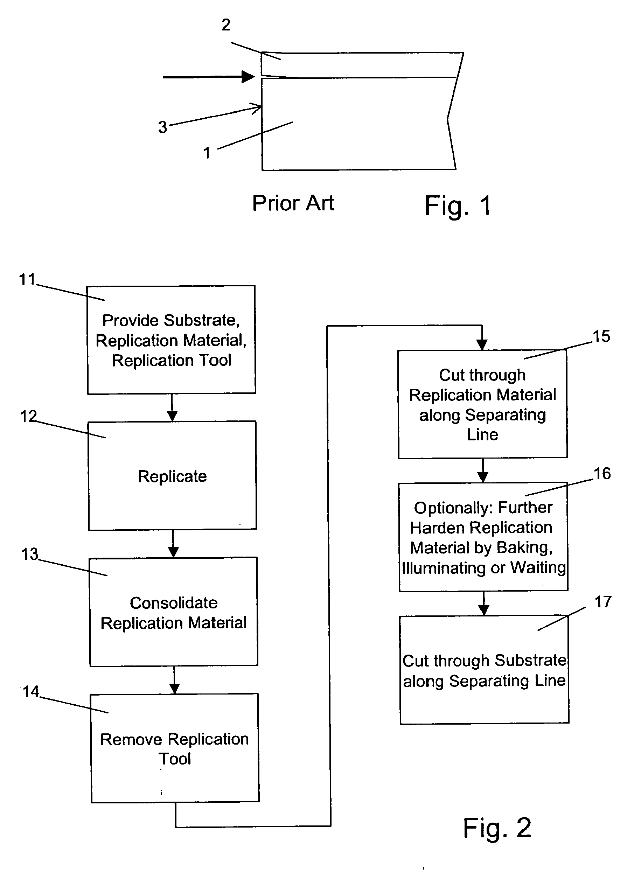

The optical element partially shown in Figure 1 comprises a substrate 1 and hardened replication material 2 thereon. The end face 3 has been created by dicing, i.e. by separating the optical element of Figure 1 from further optical elements (not shown) of the same kind produced on a common wafer. As indicated by the bold arrow in Figure 1, the interface between the replication material 2 and the substrate may be damaged at the end face. Such damage may lead to delaminating of the replication material, i.e. the replication material peeling off the substrate.

A flowchart of an embodiment of the method according to the invention is shown in Figure 2. First (step 11), an appropriate substrate, a replication tool and replication material are provided. If the optical element is a lens-like optical element, both the substrate and the replication material are at least partially, in most cases fully transparent. The substrate may for example be made from a glass or may be made from a hard plastic. It may for example be a so-called wafer (not to be confused with a semiconductor wafer), i.e. a transparent, solid, disk-shaped body of a pre-defined diameter. The replication material is preferably of a thermosetting type and may be a photo (UV-) curable transparent material such as an UV curable epoxy resin, or it may be a thermo-curable material or it may potentially also be a material curing (with a time constant that is larger than the time for placing the replication tool in position or the time for injecting the replication material in the space between the substrate and the replication tool, respectively) by a chemical reaction. As an alternative, for some applications also a thermoplastic replication material may be used. The replication tool may be any body that comprises the structural features to be replicated. It may as an example be a PDMS tool reinforced by a stiff backplate. Such replication tools are for example described in WO 2004/068 198, in particular in Figures 14 through 16 thereof and their description.

Thereafter (step 12), the structures of the replication tool are replicated by bringing the replication tool and the substrate in the desired relative position, the replication material being between the substrate and the replication tool. The replication material may either be placed on the substrate or on the replication tool or between the substrate and the replication tool before the substrate and the tool are brought into position (embossing). The replication material may, in a liquid state, also be injected after the substrate and the tool are brought into position (molding). During replication, special conditions may have to be maintained, for example the substrate and the replication tool may have to be held at an elevated temperature, for example for hot embossing. Thereafter, the replication material is consolidated (step 13), i.e. hardened at least to a certain extent. This consolidation step is affected by the appropriate means for solidifying the replication material, for example by irradiation by the appropriate, for example electromagnetic radiation in the case of photocurable replication material.

Next, the replication tool is removed (step 14) leaving a preliminary product comprising the substrate and the replication material with the replicated structure in a state where it is dimensionally stable. Then, a first separation step is carried out (step 15) by which a first separating tool is applied to the preliminary product from the side on which it comprises the replication material, or from both sides if it comprises replication material on both sides (two-sided replication). The first separating tool optionally also carves the substrate to some extent, i.e. slightly cuts into it but does not cut it through.

For certain particularly delicate optical elements, the consolidation step 13 is carried out to an extent only that the replication material is solidified but not fully hardened. In the case of thermosetting polymers as replication materials, this means that the first consolidation step (being a curing step) is only carried out to an extent that the polymers are only partially linked but that not all possible links are completed. In the case of a thermoplastic replication material, this means that the replication material is cooled to some temperature above the glass transition temperature or slightly below the glass transition temperature.

For these optical elements, an optional further step 16 is carried out, namely a second solidifying step. This solidifying step may comprise a further irradiation, a baking within a pre-defined elevated temperature range or in a heating cycle, or simply waiting some time for the replication material to be completely cured (for thermosetting replication materials), or further cooling (for thermoplastic replication materials).

Next, the substrate is cut through (step 17) to separate the individual elements on the multi-element preliminary product from each other.

According to an especially preferred embodiment, the replication tool is shaped such that along the separating lines (the dicing streets), the thickness of the replication material is particularly small. Therefore, the zone of the replication tool which after replication comprises the dicing streets is such that the average thickness of the replication material is lower than the average thickness of replication material defining the optically effective structures (i.e. the lenses or similar).

Especially, the replication tool may comprise local spacer portions being protruding structures of the replication tool. The local spacer portions are preferably flat, i.e. have a flat area of support which may rest on a thin layer of replication material between the substrate and the area of support. The thickness of the layer is for example determined by second spacer portions which during replication abut a substrate surface. It may also be determined by the balance between the force by which the replication tool is pressed against the which is the cohesive forces within the replication material, and - depending on the properties of the replication material - possibly also adhesive forces between the replication material and the substrate and tool. Even further, it may be determined by at least one active distance controller. Also combinations of these distance controlling means are possible. The thickness of the replication material in the zone of the dicing streets may for example be between 2 µm and 50 µm, preferably between 5 µm and 20 µm, especially preferred 10 µm or less.

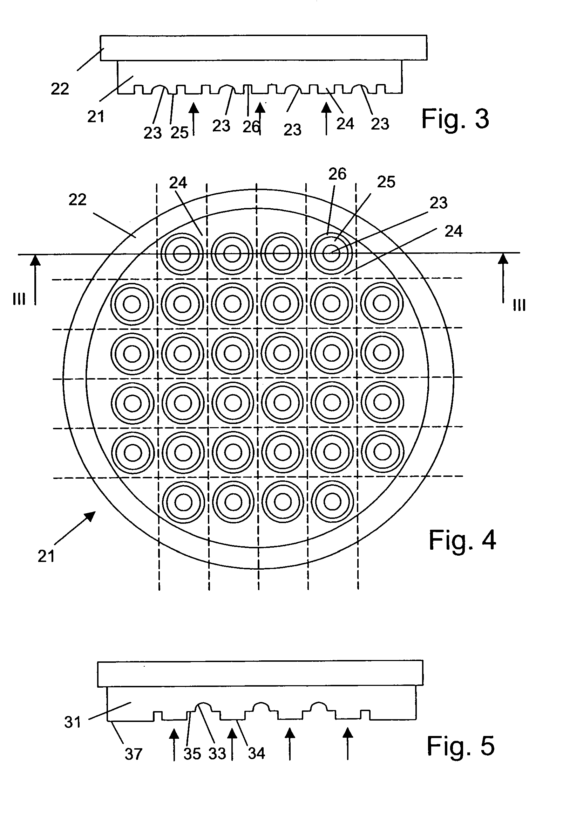

A first example of a replication tool 21 having first, local spacer portions is shown in Figures 3 and 4. Figures 3 and 4 (both not to scale) show a replication tool in section, and in a view from the replication side, respectively. The replication tool 21 comprises a plurality of replication sections 23 i.e. negative structural features defining the shape of elements to be created with the tool. The replication tool also comprises local spacer portions 24 which are located at least in the zone of the dicing streets. Possible positions of dicing streets are indicated by arrows in Figure 3 and by dashed lines in Figure 4. The embodiment shown in Figure 3 further includes further local spacer portions 25 which are immediately adjacent the replication sections 23 and thereby define the exact thickness of the replicated features. The further local spacer portions 25 may at least partially surround the replication sections 23. The replication tool further comprises spill zones 26 for excess replication material.

The replication tool 21 further comprises a rigid back plate 22 to make it dimensionally stiff on a large scale.

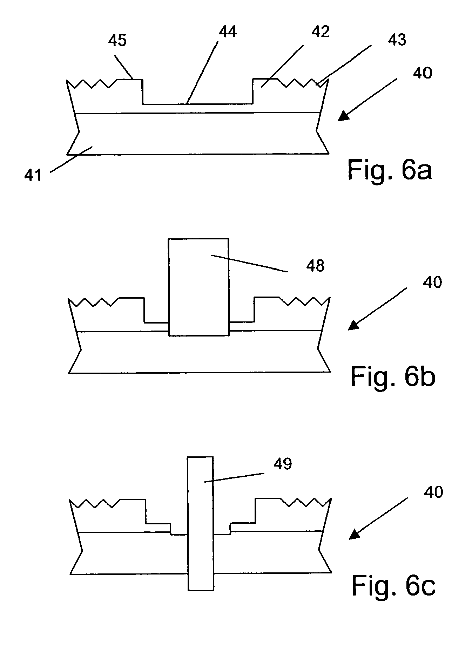

A variant of a replication tool 31, which does not include second spacer portions, is shown in Figure 5. The replication tool of Figure 5 comprises intermediate areas 35 between the replication sections 33 and the local spacer portions 34. The intermediate areas 35 may, but do not need to, have a well-defined volume. Also in Figure 5, arrows denote locations of dicing streets. The replication tool of Figure 5 comprises, as additional features, large peripheral second spacer portions 37. These second spacer portions are somewhat higher (they protrude more) than the local spacer portions and serve for a definition of the z-position of the tool relative to the surface. In a usual replication process, the peripheral spacer portions 37 abut directly the substrate, without replication material being between the second spacer portions 37 and the substrate. Of course, peripheral spacer portions may not only be present in the configuration of Figure 5, but also in the other replication tools. Second spacer portions being contact spacers do not need to be peripheral but may be distributed over the tool.

In contrast to the replication tool of Figure 5, the local spacer portions in the zone of the dicing lines may also be directly laterally adjacent the replication sections. Other configurations of replication tools are possible.

Figures 6a through 6c illustrate the separating steps. Figure 6a shows a cut-out of a preliminary product 40 which comprises a substrate 41 and at least partially hardened replication material 42 thereon. The replication material, in a previous step, has been structured by replication. In contrast to the previous figures, the shown embodiment does not comprise a macroscopic refractive structure but a micro- optic diffractive and/or refractive optically effective portion 43. The preliminary product shown also comprises an intermediate section 45 and a groove or an indented zone 44 resulting from local spacers of the replication tool being replicated. The lines of separation are now chosen to be along the indented zone. The first separating step is illustrated in Figure 6b, where a first separating tool 48 such as a cutter is schematically illustrated. The first separating tool for example is a wafer dicing tool with a relatively thick wafer blade. By the first separating tool, a relatively broad cut of about 0.3 - 0.5 mm width is made into the replication material. By this, also the substrate may be slightly carved.

Whereas the first separating step may done by wafer dicing equipment as described, it could also be a of laser ablation, water jet, mechanical scribing etc. step or a combination of these methods.

After the first separating step, a further hardening step may be carried out, as previously described. The second separating step is shown in Figure 6c, where a second separating tool 49 is shown to cut through the substrate. The width of the second cut is then typically 0.2 mm or less; a possible minimum value is 50 µm. Since the width of the second tool is lower than the width of the first tool, the interface between the substrate and the -replication material is not affected by the cut. For this reason firstly the interface may not be damaged when cutting the substrate and secondly there is a positive influence on the allowable maximum cutting velocity.

The second separating step may be done by wafer dicing equipment (with a comparably thinner wafer blade), by water jet cutting, by scribe & break technologies, laser cutting etc.

The second separating tool is different from the first separating tool in that at least one parameter of the first and the second separating tool differs. The first separating tool for example may either be based on different separating methods (such as laser ablation/sawing), or may include different parts (such as a wafer saw with a first and a second blade, as illustrated in the Figures). Alternatively, the first separating tool may for example be different from the second separating tool in that an operation parameter differs (for example, the first separating tool may be a laser cutter with a first laser beam diameter and laser power, whereas the second separating tool is the laser cutter operated with a second beam diameter and laser power), etc.

## Claims

1. A method of manufacturing a plurality of optical elements, the method comprising the steps of
• providing a substrate,
• providing a replication material in a liquid or viscous or plastically deformable state,
• placing a replication tool, which comprises a plurality of replication sections each having negative structural features defining the shape of one of the optical elements, adjacent to a face of the substrate, wherein the replication material is located between the tool and the substrate,
• consolidating the replication material,
• removing the replication tool from the substrate,
• performing, by a first separating tool, a first separating step by which at least the replication material is cut through along a separating line, which separating line separates at least two of the optical element structures from each other,
• performing, by a second separating tool different from the first separating tool, a second separating step along the separating line, whereby the substrate is cut through.

2. The method according to claim 1, wherein the step of consolidating the replication material is carried out by irradiating it by radiation, preferably by electromagnetic ultraviolet radiation.

3. The method according to claim 1 or 2, wherein the replication tool comprises at least one first zone and at least one second zone, wherein the replication sections are arranged in the first zone or first zones, wherein, during and after replication, the average thickness of the replication material in the first zone or first zones is higher than the average thickness of the replication material in the second zone or second zones, and wherein the separating line is chosen to lie in the second zone or second zones.

4. The method according to claim 3, wherein the replication tool in the second zone comprises a plurality of first spacer portions, wherein during replication the first spacer portions are located at a distance from the substrate, and with replication material remaining between the local spacer portions and the substrate.

5. The method according to claim 4, wherein said distance is determined by second spacer portions abutting, while the replication material is consolidated, a surface of the substrate.

6. The method according to any one of the preceding claims, wherein after the first separating step the replication material is hardened.

7. The method according to claim 6, wherein the step of hardening the replication material is carried out by subjecting the replication material to an annealing temperature above room temperature.

8. The method according to claim 6 or 7, wherein the step of hardening the replication material is carried out before the second separating step.

9. The method according to any one of the preceding claims, wherein the cut in the replication material produced by the first separating tool is broader than the cut in the substrate produced by the second separating tool.

10. The method according to claim 9, wherein the cut produced by the first separating tool is broader than the cut produced by the second separating tool by at least a factor of 1.5.

11. The method according to claim 9 or 10, wherein the first separating tool comprises one of a dicing saw, a laser ablator, a water jet, end a mechanical scribing tool, and wherein the second separating tool comprises one of a dicing saw, a water jet cutter, a laser cutter, and a scribe and break separator.

12. A method of manufacturing a plurality of optical elements, the method comprising the steps of
• providing a substrate,
• providing a thermosetting replication material in a liquid or viscous or plastically deformable state,
• placing a replication tool, which comprises a plurality of replication sections each having negative structural features defining the shape of one of the optical elements, adjacent to a face of the substrate, wherein the replication material is located between the tool and the substrate,
• curing the replication material,
• removing the replication tool from the substrate,
• performing, by a first separating tool, a first separating step by a first cut is made, by which at least the replication material is cut through along a separating line, which separating line separates at least two of the optical element structures from each other,
• performing, by a second separating tool different from the first separating tool, a second separating step along the separating line, whereby the substrate is cut through by a second cut,
• wherein the first cut is broader than the second cut.

13. The method according to claim 12, wherein after the first separating step and before the second separating step the thermosetting replication material is further hardened.
